# EUROPÄISCHE PATENTANMELDUNG

(11) **EP 1 976 088 A1**
(43) Veröffentlichungstag der Anmeldung: **01.10.2008**
(21) Anmeldenummer: 07006558.6
(22) Anmeldetag: 29.03.2007
(51) Int. Cl.: H02G 1/08

(54) **Vorrichtung zum Einführen von einer Einziehfeder**

(71) Anmelder: REX-TECHNOLOGIE GMBH & CO. KG, 5303 Thalgau (AT)
(72) Erfinder: Haslacher, Andreas, 5310 Mondsee (AT)
(74) Vertreter: Babeluk, Michael

(57) **Zusammenfassung**

Die Erfindung betrifft eine Vorrichtung zum Einführen von einer Einziehfeder (4) in Rohre mit:
a. einem ersten Bestätigungskörper (5), in dem die Einziehfeder (4) gleitend geführt ist;
b. einer im ersten Betätigungskörper (5) angeordneten ersten Klemmeinrichtung (1, 01), die die Bewegung der Einziehfeder (4) sperrt und freigibt;
c. einem zweiten Betätigungskörper (6, 7), in dem die Einziehfeder (4) gleitend geführt ist;
d. einer vorzugsweise im zweiten Betätigungskörper (6, 7) angeordneten zweiten Klemmeinrichtung (2, 02), die die Bewegung der Einziehfeder (4) sperrt und freigibt;
e. einem Teleskoprohr (8, 08), das die erste Klemmeinrichtung (1, 01) und die zweiten Klemmeinrichtung (2, 02) verbindet.

Ein problemloses Einführen auch in schwierigen Situationen wird dadurch ermöglicht, dass das Teleskoprohr (8, 08) verdrehfest ausgebildet ist.

## Beschreibung

Die vorliegende Erfindung betrifft eine Vorrichtung gemäß dem Oberbegriff von Patentanspruch 1.

Beim Verlegen von Elektroleitungen, Kabeln, aber auch Wasserrohren ist es üblich, zunächst ein Rohr im Mauerwerk zu verlegen und zu einem späteren Zeitpunkt die Kabel oder dergleichen in das Rohr einzuziehen. Dies erfolgt in der Praxis dadurch, dass eine Einziehfeder von einem Rohrende aus eingeführt wird, um eine Verbindung mit dem anderen Rohrende herzustellen. Danach wird das Kabel am Kopf der Einziehfeder befestigt und in der entgegengesetzten Richtung durch das Rohr gezogen.

Wenn das Rohr einen engen Querschnitt aufweist und Krümmungen mit engen Radien vorliegen, ist es schwierig und mühsam, die Einziehfeder in das Rohr einzuführen. Es sind verschieden Vorrichtungen bekannt geworden, mit denen das Einschieben erleichtert und gegebenenfalls automatisiert werden kann. Solche Vorrichtungen sind aufwendig und schwierig zu handhaben, insbesondere, wenn man bedenkt, dass sich die Rohrenden, an denen die Einziehfeder eingeführt werden muss, fallweise in großer Höhe oder an schlecht zugänglichen Stellen von Räumen befinden.

Federn, die in ihrem Aufbau im Wesentlichen Einziehfedern entsprechen, werden aber auch zur Reinigung von ansonsten unzugänglichen Rohrsystemen, wie beispielsweise Wasserrohren oder Ableitungsrohren verwendet. Auch diese Anwendung soll von der vorliegenden Erfindung abgedeckt werden.

Als Betätigungskörper im Sinn der Definition des Hauptanspruchs soll ein Teil der Vorrichtung verstanden werden, der dazu dient diese zu ergreifen, sie zu bewegen oder eine manuelle Klemmeinrichtung zu betätigen.

Aufgabe der vorliegenden Erfindung ist es, eine Vorrichtung der oben beschriebenen Art so weiterzubilden, dass das Einschieben von Einziehfedern erleichtert wird, wobei es insbesondere möglich sein soll, dass die betreffende Vorrichtung von einer Person ohne Hilfskräfte bedient werden kann. Eine weitere Aufgabe der vorliegenden Erfindung ist es, die Vorrichtung kompakt und leicht auszubilden, so dass das Einschieben ohne Schwierigkeiten auch an schwer zugänglichen oder hoch gelegenen Stellen problemlos durchgeführt werden kann. Das Einschieben soll dabei nach Möglichkeit ohne Einsatz von Hilfsantrieben möglich sein, das heißt auch dann, wenn elektrischer Strom nicht verfügbar ist. Eine weitere Aufgabe der Erfindung ist es, eine besonders leichte Möglichkeit zu bieten, die Einziehfeder während des Einschiebens zu verdrehen, um Blockaden zu vermeiden. Insbesondere soll es möglich sein, gegebenenfalls verfügbare Hilfsmittel wie etwa Akkuschrauber zu verwenden, um in schwierigen Fällen die Anwendung zu erleichtern.

Erfindungsgemäß wird diese Aufgabe durch eine Vorrichtung gelöst, die die Merkmale von Patentanspruch 1 aufweisen. Das Einschieben der Einziehfeder mit der erfindungsgemäßen Vorrichtung erfolgt dabei in besonders einfacher Weise durch eine pumpende Bewegung, bei der die betreffende Person bei Vorliegen eines Betätigungskörpers diesen vor und zurück schiebt bzw. bei Vorliegen von zwei Betätigungskörpern diese abwechselnd zusammenschiebt und wieder auseinanderzieht. Beim ersten Arbeitshub, wenn der zweite Betätigungskörper in Richtung des ersten Betätigungskörpers gedrückt wird, arretiert die zweite Klemmeinrichtung, so dass die Einziehfeder durch den ersten Betätigungskörper hindurch in das Rohr eingeschoben wird, wobei die erste Klemmeinrichtung die Bewegung freigibt. Im zweiten Arbeitshub wird der zweite Betätigungskörper zurückgezogen, wobei die erste Klemmeinrichtung ein unbeabsichtigtes Herausziehen der Einziehfeder verhindert.

Wesentlich an der vorliegenden Erfindung ist die Erkenntnis, dass es zwar theoretisch möglich ist durch die erste oder die zweite Klemmeinrichtung in geklemmtem Zustand auch ein Torsionsmoment auf die Einziehfeder auszuüben. Diese Klemmeinrichtungen sind jedoch auf den Vorschub der Einziehfeder in Axialrichtung optimiert und können die erforderlichen Torsionsmomente nicht in befriedigender Weise übertragen. Durch eine dritte Klemmeinrichtung kann nun ein wesentlich größeres Torsionsmoment übertragen werden, was den Einsatzbereich der Vorrichtung auch auf schwierigere Bedingungen ausdehnt.

Günstig ist es, wenn die erste Klemmeinrichtung im ersten Betätigungskörper die Einziehfeder in einer vorbestimmten Richtung sperrt und in die entgegengesetzte Richtung freigibt. Es handelt sich somit um eine automatisch arbeitende Klemmeinrichtung, die ohne manuelle Klemm- und Freigabe-Manipulationen auskommt. Ähnliches gilt für die zweite Klemmeinrichtung.

Eine besonders bevorzugte Ausführungsvariante der Erfindung sieht vor, dass die erste Klemmeinrichtung gegenüber dem ersten Betätigungskörper verdrehbar gelagert ist. Dadurch kann die Klemmeinrichtung gegenüber Torsionsmomenten entkoppelt werden, die dann getrennt über besser dafür geeignete Bauteile eingeleitet werden. Analoges gilt gemäß einer weiteren Variante für die zweite Klemmeinrichtung.

Von besonderem Vorteil ist es, wenn eine Klemmeinrichtung mit einem Ratschensystem verbunden ist. Dadurch wird erreicht, dass eine schwergängige Einziehfeder durch eine Drehbewegung um Ihre Längsachse erfolgreich eingeführt werden kann. In vielen Fällen reicht jedoch der Verdrehwinkel, der durch Verdrehung eines Betätigungskörpers auf die Einziehfeder ausgeübt werden kann nicht aus, um die Durchgängigkeit zu erreichen. Durch das Vorsehen eines Ratschensystems kann nunmehr durch hin- und hergehende Verdrehung eines Betätigungskörpers oder sonstigen Betätigungselementes eine Verdrehung der Einziehfeder um ihre Längsachse um beliebig große Winkel erreicht werden. Dies ermöglicht eine erhebliche Steigerung der Funktionalität der Vorrichtung.

Vorzugsweise ist ein verdrehfestes Teleskoprohr vorgesehen. Wesentlich dabei ist, dass es in Abhängigkeit vom jeweiligen Betriebszustand der Vorrichtung möglich sein soll, ein Drehmoment um die Längsachse auf die Einziehfeder auszuüben. Auch soll es dabei möglich sein, eine Umgreifbewegung auszuführen, wenn der Verdrehwinkel bei festgehaltenem Betätigungskörper nicht ausreicht, um auch bei Bögen und langen Leitungen die Einziehfeder erfolgreich einzuführen. Durch das verdrehfeste Teleskoprohr ist es nun möglich, die beiden Betätigungskörper in Drehrichtung miteinander zu koppeln, was eine erhebliche Steigerung der Funktionalität bewirkt.

Die Erfindung sieht eine weitere Klemmvorrichtung vor, die ein wahlweises Festklemmen der Einziehfeder ermöglicht. In diesem Zusammenhang ist weiters bevorzugt, wenn die weitere Klemmeinrichtung mit einem Betätigungskörper verbunden ist. Auf diese Weise kann ein besonders kompakter Aufbau erreicht werden.

Alternativ dazu ist es auch möglich, dass die weitere Klemmeinrichtung als Feststelleinrichtung für die erste oder die zweite Klemmeinrichtung ausgebildet ist. Dabei werden in der Regel zwar nicht die gleichen Torsionsmomente erreicht wie im Fall einer für Torsion dezidierten Klemmeinrichtung, aber es kann ein besonders einfacher Aufbau realisiert werden.

Es ist auch in bevorzugter Weise möglich, dass die weitere Klemmeinrichtung mit mindestens einem Radiallager verbunden ist. Auch auf diese Weise ist es möglich, weitere Bauteile torsionsmäßig zu entkoppeln, was die Bedienung vereinfacht.

Eine besonders einfache Bedienung insbesondere in Zusammenhang mit einer Verdrehung der Einziehfeder kann dadurch erreicht werden, dass die weitere Klemmeinrichtung mit mindestens einem Ratschensystem verbunden ist, das vorzugsweise als Doppel-Ratschensystem ausgebildet ist, das durch Zusammenwirken von zwei Freilauflagern/Ratschensystemen durch einfache Ratschenbewegung der Betätigungskörper eine radiale Drehbewegung der weiteren Klemmeinrichtung erzeugt.

Die Bedienung der Vorrichtung kann weiters dadurch vereinfacht werden, dass die weitere Klemmeinrichtung als gegenüber dem Betätigungskörper verdrehbarer Handgriff ausgebildet ist.

Eine weitere bevorzugte Lösung in Zusammenhang mit der vorliegenden Erfindung sieht vor, dass ein Übersetzungsgetriebe, welches in Radialrichtung der weiteren Klemmeinrichtung wirkt und diese um die eigene Achse bewegt, vorgesehen ist, welches vorzugsweise als Übersetzung ins Schnelle ausgebildet ist. Wesentlich an dieser Variante ist die Erkenntnis, dass eine Einziehfeder durch eine Drehbewegung um ihre Längsachse besser gängig gemacht werden kann, insbesondere um auch bei Bögen und langen Leitungen die Einziehfeder erfolgreich einführen zu können. Diese Drehbewegung kann beispielsweise durch Verdrehung eines Betätigungskörpers oder eines anderen Betätigungselementes auf die Einziehfeder ausgeübt werden. Bedingt durch die anatomischen Verhältnisse ist der Verdrehwinkel bei festgehaltenem Betätigungskörper begrenzt und beträgt beispielsweise etwa 90°. Durch das erfindungsgemäße Übersetzungsgetriebe kann nunmehr dieser Winkel, um den die Einziehfeder in einer durchgängigen Handbewegung verdreht werden kann, wesentlich gesteigert werden.

Ein besonders hohes Torsionsmoment wird dadurch erreicht, dass die weitere Klemmeinrichtung Backen aufweist, die gegen die Einziehfeder pressbar sind.

Eine ratschenartige Funktion im Zusammenhang mit der Verdrehung der Einziehfeder kann dadurch realisiert werden, dass die weitere Klemmeinrichtung eine exzenterförmige Backe aufweist, die gegen die Einziehfeder selbst unterstützend pressbar ist.

Bevorzugt ist es weiters, dass die weitere Klemmeinrichtung manuell verriegelbar und entriegelbar ist. Auf diese Weise kann die Verdrehbewegung beliebig gesteuert werden.

Eine Erhöhung der Funktionalität kann auch dadurch erreicht werden, dass die erste Klemmeinrichtung und die zweite Klemmeinrichtung jeweils eine umschaltbare Klemmeinrichtung aufweisen.

Eine besonders einfache und robuste Lösung kann dadurch verwirklicht werden, dass die Klemmeinrichtungen als Sperrklinken ausgebildet sind.

Eine alternative Lösung zur Ausbildung automatisch wirkender Klemmeinrichtungen sieht vor, dass die Klemmeinrichtungen als Konus ausgebildet sind, durch den die Einziehfeder durchgeführt ist und in den Klemmkugeln angeordnet sind, um die Bewegung der Einziehfeder in eine Richtung zu sperren.

Günstig ist es ferner, wenn am Betätigungskörper ein Mundstück zum Einführen der Einziehfeder in eine Öffnung des Rohres vorgesehen ist, und dass das Mundstück einen flexiblen Schlauch umfasst, der die Einziehfeder führt. Auf diese Weise kann das Einführen der Einziehfeder weiter wesentlich erleichtert werden.

In diesem Zusammenhang ist besonders vorteilhaft, wenn das Mundstück einen flexiblen Schlauch umfasst, der die Einziehfeder führt und mit einem mechanischen Klemmstück versehen ist, welches mit einem Schnellverschluss zur Festklemmung an Elektroschläuche und Rohre versehen ist. Dadurch kann die Vorrichtung an der Einführungsöffnung befestigt werden, was die Manipulation weiter vereinfacht.

In der Folge wird die vorliegende Erfindung anhand der in den Figuren dargestellten Ausführungsbeispielen näher erläutert. Es zeigen:
- Fig. 1a: schematisch ein Mundstück 10 einer erfindungsgemäßen Klemmeinrichtung;
- Fig. 1b: Ansicht des Mundstücks 10 von Fig. 1a von vorne;
- Fig. 2a: eine axonometrische Darstellung einer automatischen Klemmeinrichtung;
- Fig. 2b: eine alternative Ausführungsform einer Klemmeinrichtung im Längsschnitt;
- Fig. 3: eine weitere Ausführungsvariante einer Klemmeinrichtung im Längsschnitt;
- Fig. 4: eine weitere Ausführungsvariante einer Klemmeinrichtung im Längsschnitt;
- Fig. 5: eine weitere Ausführungsvariante einer Klemmeinrichtung im Querschnitt;
- Fig. 6a: eine Ausführungsvariante einer weiteren Klemmeinrichtung in einer axonometrischen Darstellung;
- Fig. 6b: die Ausführungsvariante von Fig. 6a im Querschnitt;
- Fig. 7: eine weitere Ausführungsvariante der weiteren Klemmeinrichtung in einer axonometrischen Darstellung;
- Fig. 8: eine schematische Darstellung eines Übersetzungsgetriebes in einem Diagramm und in einer axonometrischen Ansicht;
- Fig. 9: drei Diagramme, die die Wirkung von Freilauflagern bzw. Ratschen erläutern;
- Fig. 10: eine Ausführungsvariante der Erfindung in einem schematischen Längsschnitt;
- Fig. 11: eine alternative Ausführungsvariante der Erfindung in einem schematischen Länggschnitt;
- Fig. 11b: eine weitere alternative Ausführungsvariante der Erfindung in einem schematischen Länggschnitt;
- Fig. 12: eine alternative Ausführungsvariante der Erfindung in einem schematischen Länggschnitt;
- Fig. 13: eine alternative Ausführungsvariante der Erfindung in einem schematischen Länggschnitt;
- Fig. 14a: verschiedene Ausführungsvarianten verdrehfester Teleskoprohre in axonometrischen Darstellungen;
- Fig. 14b: verschiedene Ausführungsvarianten verdrehfester Teleskoprohre in axonometrischen Darstellungen;
- Fig. 14c: verschiedene Ausführungsvarianten verdrehfester Teleskoprohre in axonometrischen Darstellungen; und
- Fig. 15: bis Fig. 28 verschiedene Ausführungsvarianten der Erfindung in schematischen Darstellungen.

Im Anhang zur Beschreibung werden die in den Figuren verwendeten Bezugszeichen tabellarisch zusammengestellt.

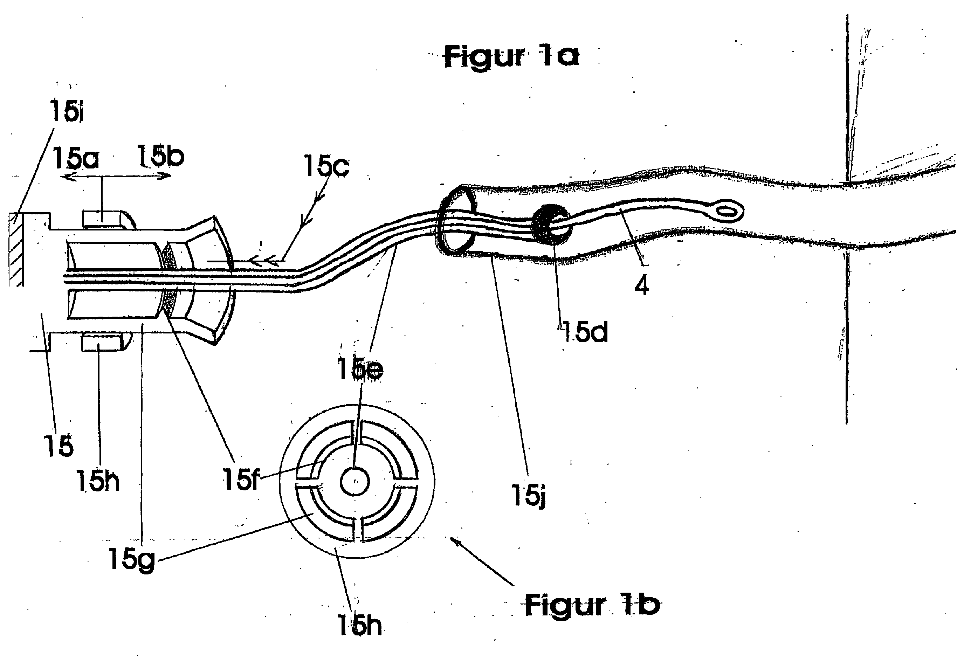

In den Fig. 1a und Fig. 1b ist eine mögliche Ausbildung des vorderen Endes einer erfindungsgemäßen Vorrichtung gezeigt. In das offene Ende eines Elektroschlauchs 15j wird ein flexibler Schlauch (Stahlfederkern 15e), in dessem Inneren die Einziehfeder 4 angeordnet ist, eingeführt, der durch seine Stabilität das Einführen in Öffnungen (Elektrodosen, Elektroleitungen, usw.) ermöglicht.

Der flexible Schlauch 15e wird von Klemmbacken 15g ummantelt, welcher ein Festklemmen der Elektroleitung 15j durch Einführen in die Öffnung von 14c ermöglicht.

Die Klemmbacken 15g sind an der Wurzel mit einem Mundstück 15 verbunden, wobei man durch axiales Verschieben eines Klemmringes 15h einen Klemmsteg 15f zusammendrücken kann, um die Klemmbacken 15g mit dem Elektroschlauch 15j in festem Eingriff zu bringen. Durch diesen mechanischen Klemmvorgang wird das Mundstück 15 mit dem Elektroschlauch 15j verbunden.

Durch die Ansteckkupplung bzw. den Schnellverschluss 15i kann das Mundstück 15 durch ein den Umständen entsprechendes Mundstück 15 mit einer anderen Ausführungsvariante problemlos und schnell an der Einschubhilfe bzw. Vorrichtung ausgewechselt werden.

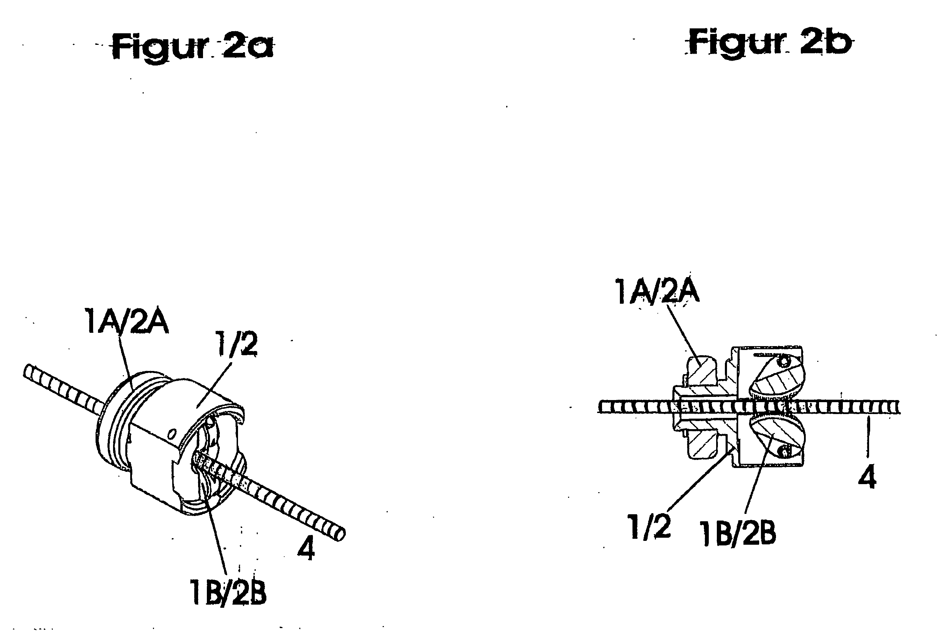

Bei der in Fig. 2a dargestellten Klemmeinrichtung 1 oder 2 sind Klemmbacken 1B, 2B vorgesehen, die durch ihre mechanische Ausführung bzw. Eigenform und durch Federwirkung selbst arbeitend, d.h. in Arbeitsrichtung selbst arretierend, d.h. klemmend, und in Ausholrichtung selbst entriegelnd ausgebildet sind.

Die Klemmeinrichtung 1, 2 kann durch ein Radiallager 1a, 2a, das am Klemmkörper angebracht ist, frei um die eigene Achse gedreht werden. Diese Ausführungsversion ermöglicht eine Drehbewegung der Einziehfeder 4 in geklemmtem Zustand und einen Vorschub bzw. eine axiale Krafteinwirkung, welche den Vorwärtsschub der Einziehfeder und der Drehbewegung gewährleistet (dies ermöglicht eine Einsatzversion mit einer Akkubohrmaschine, wobei die Einziehfeder 4 von einer zweiten Person in Drehbewegung versetzt wird) und durch die Einschubvorrichtung an die Elektroleitungen unter Drehbewegung die Einziehfeder 4 eingeschoben wird. Dies wird häufig bei sehr schwierigen Bedingungen und langen Leitungen bzw. Hindernissen durchgeführt.

Die Fig. 2b zeigt die Ausführung der Fig. 2a im Längsschnitt.

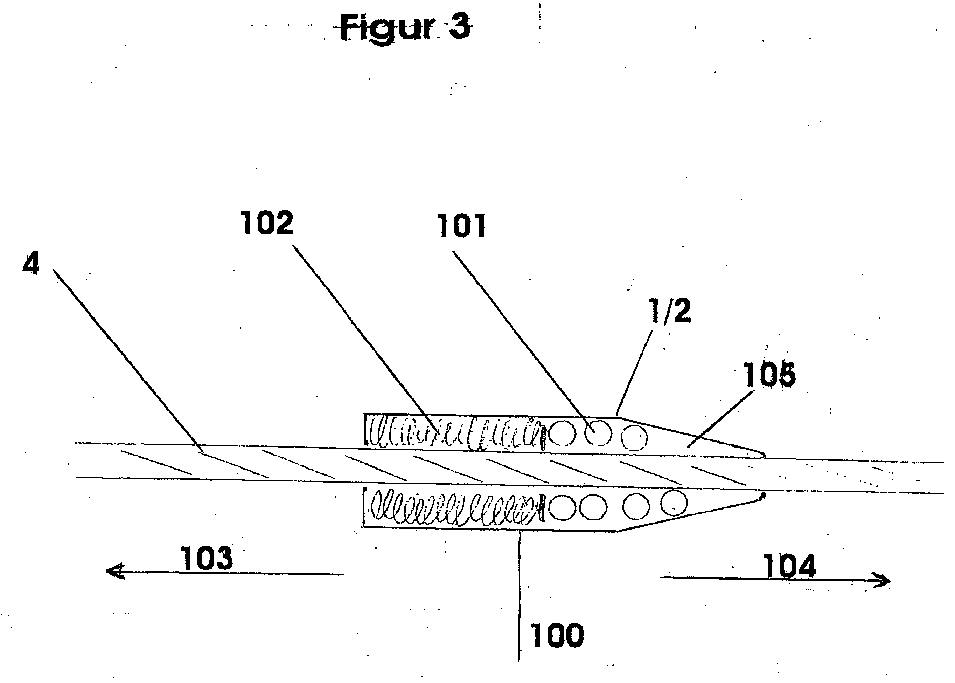

Eine alternative Klemmeinrichtung ist in Fig. 3 dargestellt. Diese Klemmeinrichtung besitzt einen Konus 105, in dem Klemmkugeln 101 angeordnet sind, die die Einziehfeder 4 umgeben. Eine Spannfeder 102 drückt die Klemmkugeln 101 in die Sperrrichtung 104 der Einziehfeder 4. In die Freilaufrichtung 103 kann die Klemmeinrichtung mit minimaler Kraft bewegt werden.

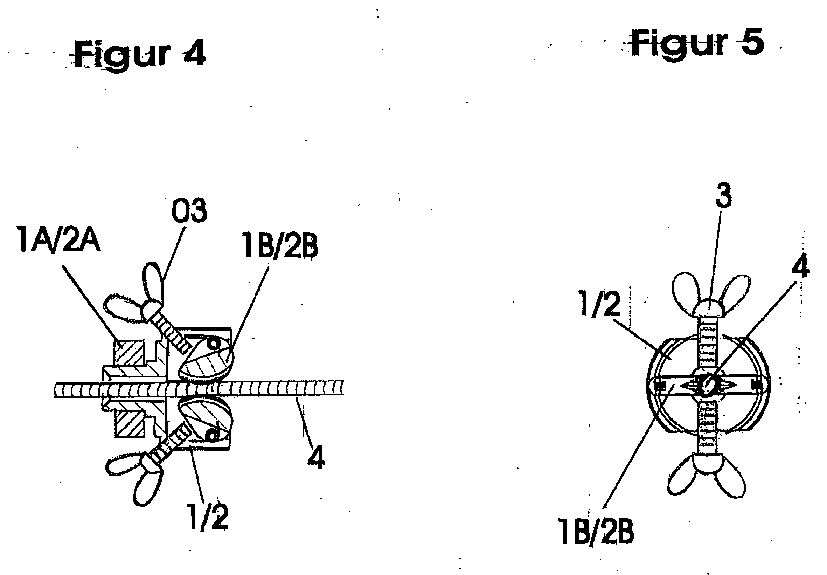

In Fig. 4 ist im Detail eine Lösung dargestellt, bei der eine Klemmeinrichtung 3 in einer automatischen Klemmeinrichtung 2 so integriert ist, dass die Klemmbacken bzw. Sperrklinken 2B durch einen manuellen Eingriff in den Klemmmechanismus 03 auf der Einziehfeder 4 so festgeklemmt werden, dass auch ein Torrsionsmoment auf die Einziehfeder 4 ausgeübt werden kann, um diese um die eigene Achse zu drehen.

In der Fig. 5 ist eine alternative Lösung für die Integration der Klemmeinrichtung 3 in der automatischen Klemmeinrichtung 2 dargestellt, um diese um die eigene Achse zu bewegen.

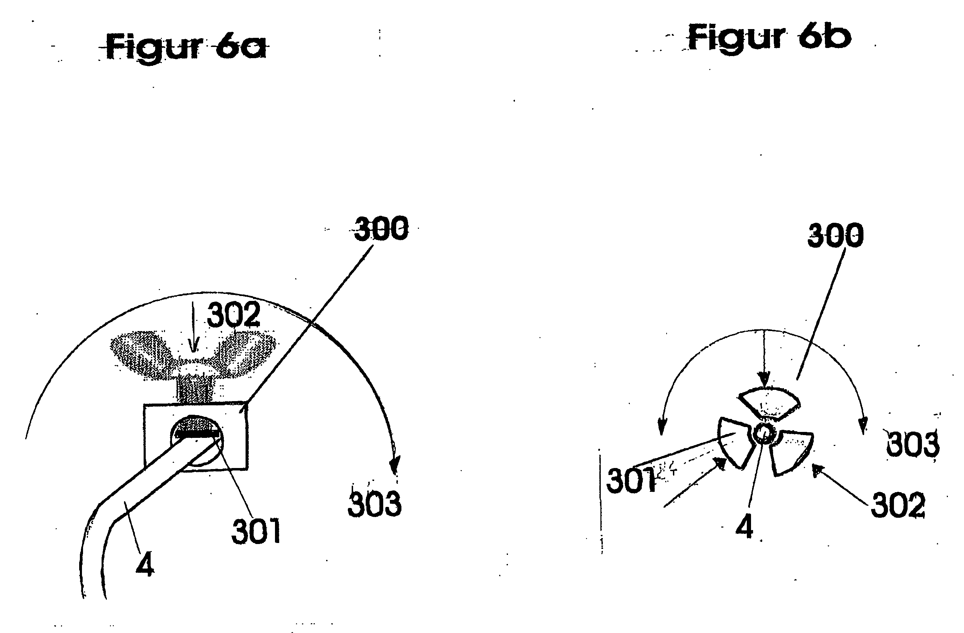

Bei der Ausführungsvariante von Fig. 6a werden Klemmbacken 301 in Radialrichtung auf die Einziehfeder 4 gedrückt, so dass diese entsprechend dem Teil 303 um ihre Achse verdreht werden kann.

Alternativ kann dieses Festklemmen durch drei Klemmbacken 301 erfolgen, die in Radialrichtung 302 auf die Einziehfeder 4 angedrückt werden.

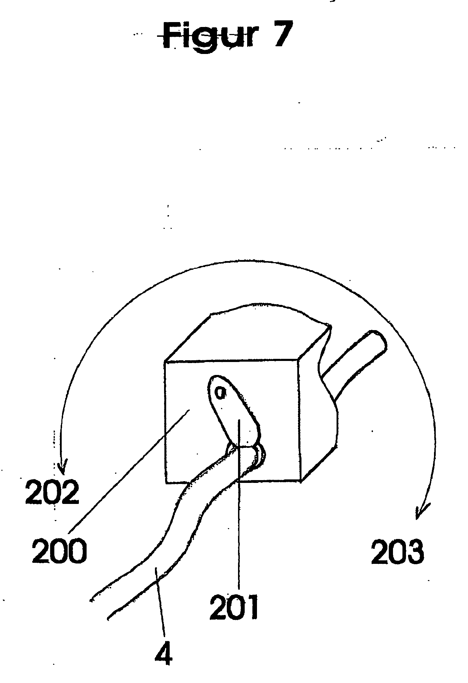

Die Klemmeinrichtung von Fig. 7 ist insgesamt mit 200 bezeichnet und besitzt eine exzenterförmige Sperrklinke, die dazu dient, in Richtung 203 selbsttätig zu sperren, um ein Torrsionsmoment auf die Einziehfeder 4 auszuüben, hingegen in Richtung 202 eine freie Verdrehung zu ermöglichen.

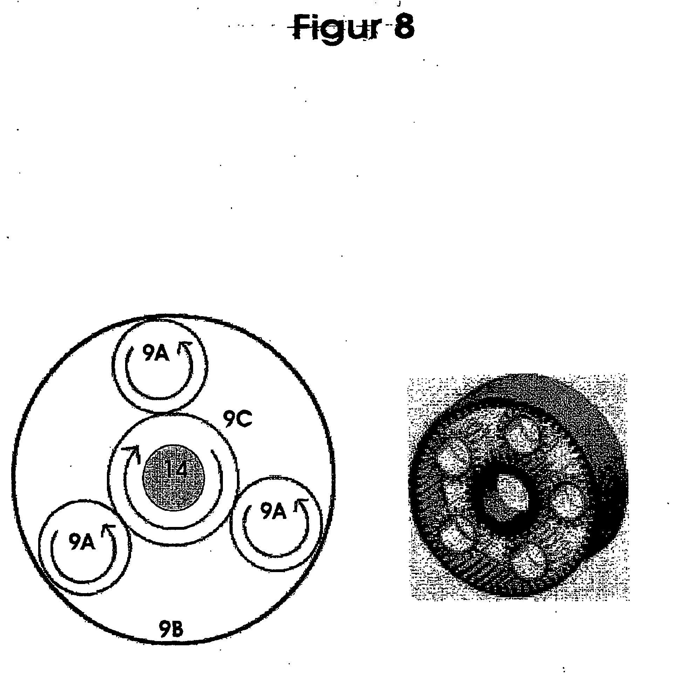

Fig. 8 zeigt die Ausbildung eines Übersetzungsgetriebes in der Art eines Planetengetriebes. Eine Übersetzung ins Schnellere ist durch Bewegen der Betätigungskörper 5, 6, 7 über das Hohlrad 9b und die Planetenräder 9a auf das Sonnenrad 9c, welches wiederum die Hohlwelle 14 und die damit verbundene Klemmeinrichtung 303 um die eigene Achse bewegt, möglich.

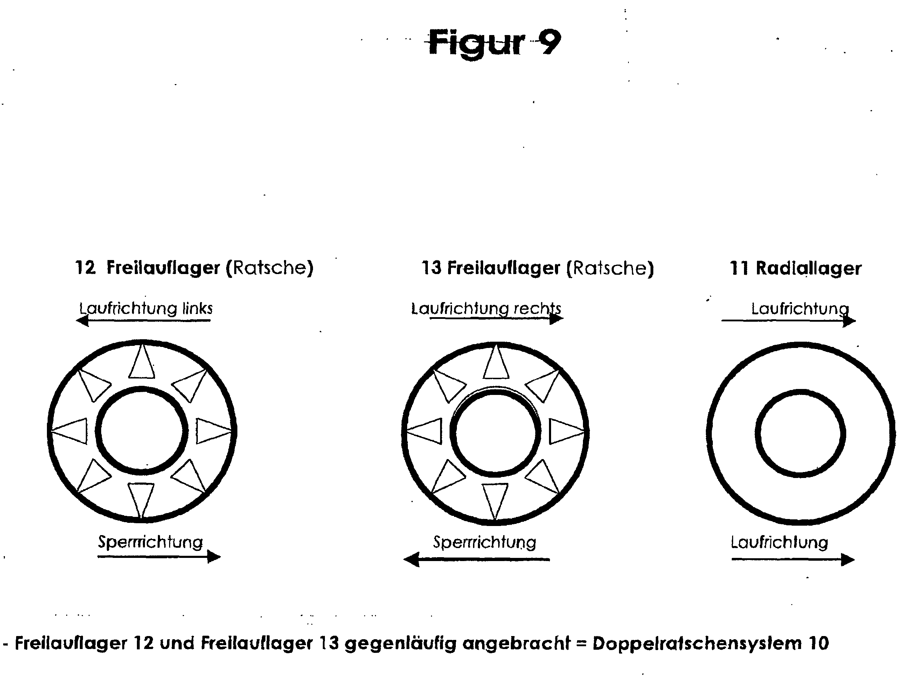

Fig. 9 zeigt schematisch, dass die einzelnen Ratschen bzw. Freilauflager 12, 13 eine Sperrrichtung über eine Laufrichtung aufweisen. Bei einem Radiallager 11 gibt es keine Sperrrichtung und es ist dieses in beiden Richtungen frei drehbar.

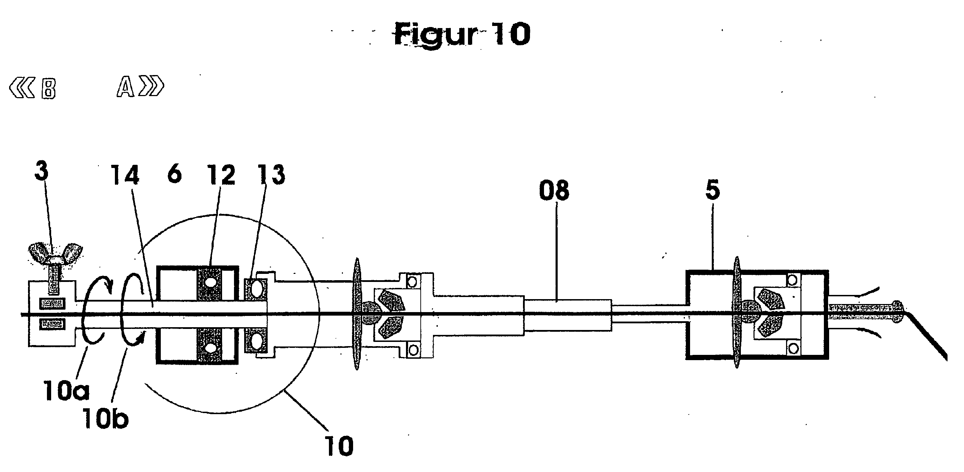

In Fig. 10 ist eine Ausführungsvariante dargestellt, bei der mit 10 ein Doppel-ratschensystem dargestellt ist, das durch das Zusammenwirken von zwei Ratschen bzw. Freilauflagern 12, 13 eine radiale Drehbewegung der Klemmeinrichtung 3 durch abwechselndes Bewegen des Betätigungskörpers 6, 7 in Richtung 10a und Richtung 10b erfolgt.

Bei Betätigen des Betätigungskörpers 6 in Richtung 10a gibt die Ratsche bzw. das Freilauflager 12 diese Bewegung durch ihre Laufrichtung frei und die Ratsche bzw. das Freilauflager 13 sperrt die Hohlwelle 14, welche mit der Klemmeinrichtung 3 fix verbunden ist, so dass diese bewegt wird.

Bei Betätigen des Betätigungskörpers 6 in Richtung 10b sperrt die Ratsche bzw. das Freilauflager 12 die Verbindung zur Hohlwelle 14 und die Ratsche bzw. das Freilauflager 13 gibt diese Richtung frei, so dass sich die Klemmung 13, welche direkt mit der Hohlwelle 14 verbunden ist, in Richtung 10b radial um die eigene Achse bewegt.

Bei einem Doppelratschensystem kann selbstverständlich zwischen der Klemmeinrichtung 3 und dem Doppelratschensystem 10 ein Übersetzungsgetriebe 9 eingebaut werden, so dass die Arbeitsbewegung 10b durch das Bewegen des Betätigungskörpers 6 auf die Klemmeinrichtung 3 ins Schnelle übersetzt wird. Vorzugsweise soll dabei das Übersetzungsverhältnis etwa 1:4 betragen.

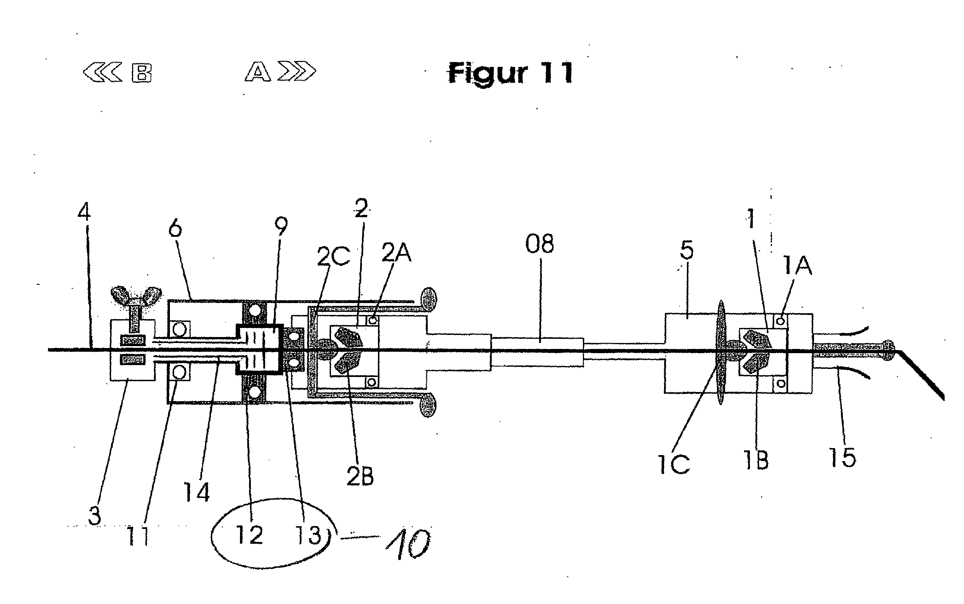

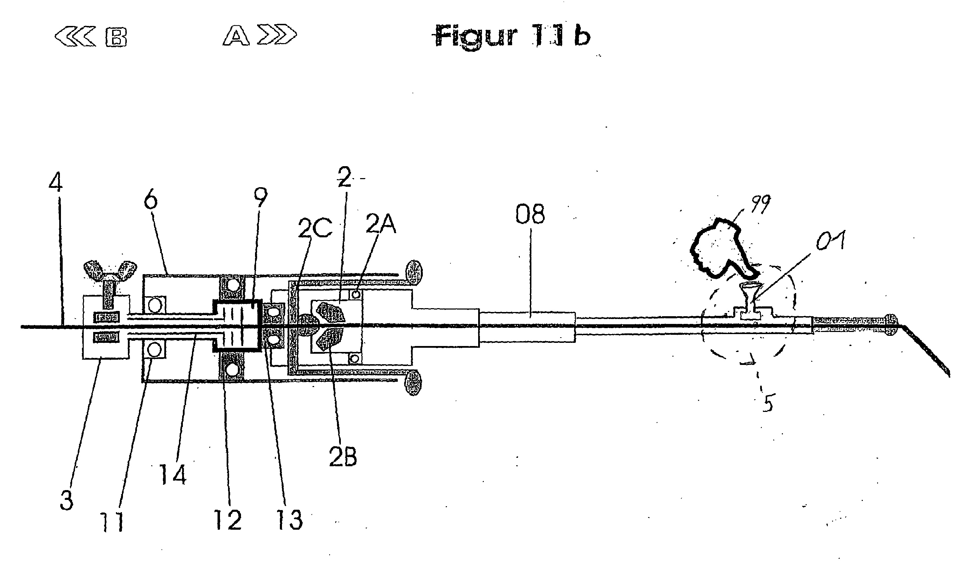

In Fig. 11 ist eine weitere Ausführungsvariante der Erfindung dargestellt. Dabei ist das Doppelratschensystem 10 durch zwei Freilauflager 12, 13 realisiert, die über ein Getriebe 9 mit einer Hohlwelle 14 zusammenwirken.

In Fig. 11b ist eine weitere Ausführungsvariante der Erfindung dargestellt, die weitgehend der von Fig. 11 entspricht. Unterschiedlich ist, dass der erste Betätigungskörper 5 als Abschnitt des Teleskoprohrs 08 ausgebildet ist, an dem eine manuelle Betätigungseinrichtung vorgesehen ist, die mit der schematisch angedeuteten Hand 99 zu bedienen ist.

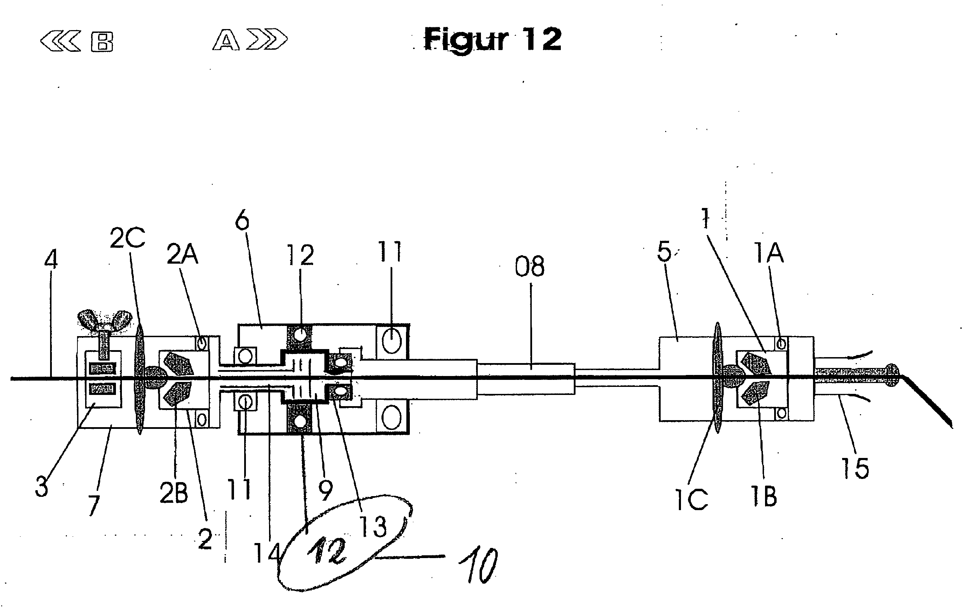

Bei der Ausführungsvariante von Fig. 12, die ähnlich der von Fig. 11 aufgebaut ist, steht die Hohlwelle 14 mit einem Betätigungskörper 7 in Verbindung, in dem die Klemmeinrichtungen 2 und 3 integriert sind.

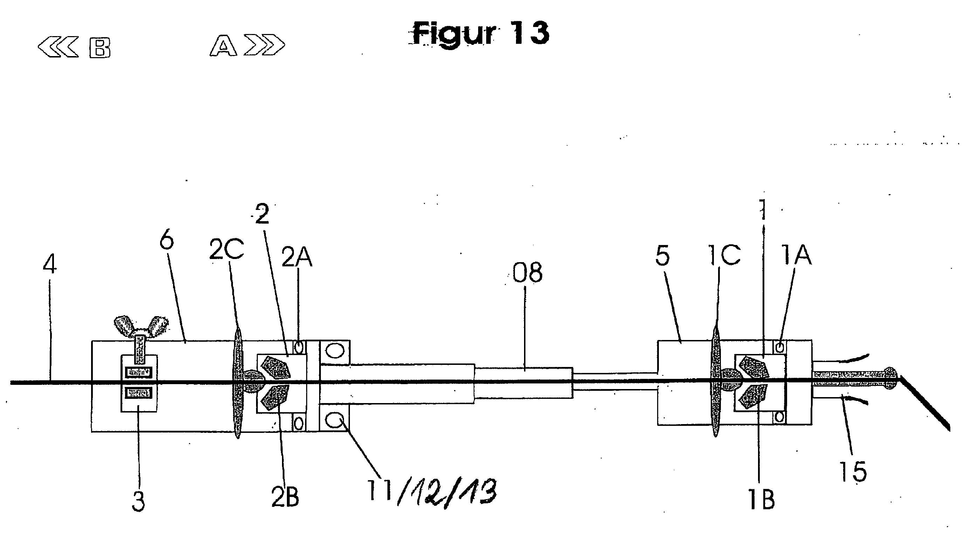

Fig. 13 zeigt eine weitere bevorzugte Ausführungsvariante der Erfindung, bei der die Klemmeinrichtungen 2 und 3 im zweiten Betätigungskörper 6 integriert sind.

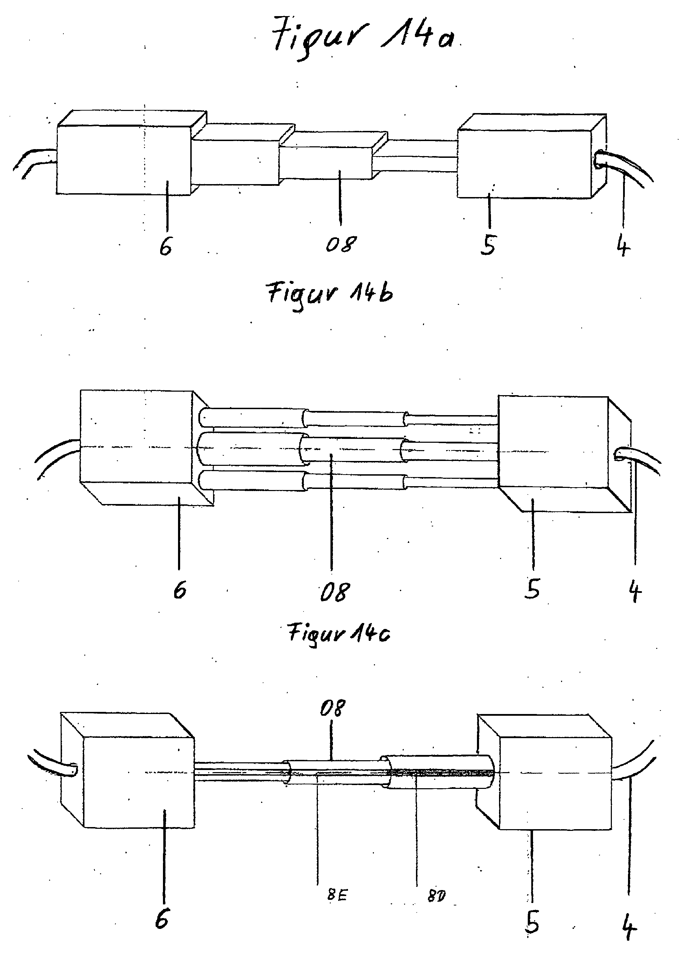

Fig. 14a, Fig. 14b und Fig. 14c zeigen drei verschiedene Ausführungsvarianten eines verdrehfesten Teleskoprohrs 08. Bei der Ausführungsvariante von Fig. 14a wird durch eine unrunde Ausführung der einzelnen Teleskopelemente eine Verdrehung verhindert. Bei der Ausführungsvariante von Fig. 14b sind mehrere Teleskoprohre nebeneinander angeordnet, so dass eine Verdrehung nicht möglich ist. Fig. 14c zeigt eine Variante, bei der eine Ausbildung mit Nut 8D und Feder 8E eine Verdrehung verhindert wird.

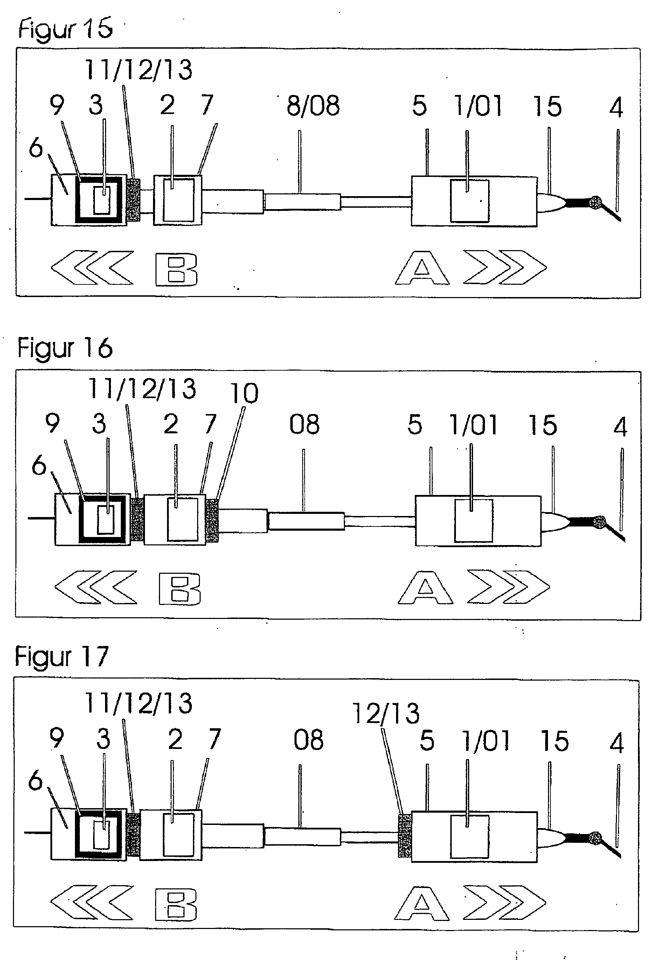

Die Fig. 15 bis Fig. 26 zeigen verschiedene Abwandlungen von erfindungsgemä-ßen Lösungen in schematischen Darstellungen.

Die Ausführungsvariante von Fig. 15 besitzt eine weitere Klemmeinrichtung 3, die über ein Radiallager 11 bzw. über ein Ratschensystem 12, 13 mit der zweiten Klemmeinrichtung 2 im Betätigungskörper 7 verbunden ist. Das Teleskoprohr 8, 08, kann verdrehfest oder nicht verdrehfest ausgebildet sein. Ebenso kann die erste Klemmeinrichtung 1, 01, automatisch oder manuell ausgebildet sein.

Die Ausführungsvariante von Fig. 16 unterscheidet sich von der von Fig. 15 dadurch, dass das Teleskoprohr 08 starr ausgebildet ist und über ein Doppelratschensystem 10 mit dem Betätigungskörper 7 in Verbindung steht. Bei Fig. 17 ist ceteris paribus ein Ratschensystem 12, 13 am vorderen Ende des starren Teleskoprohrs 08 vorgesehen.

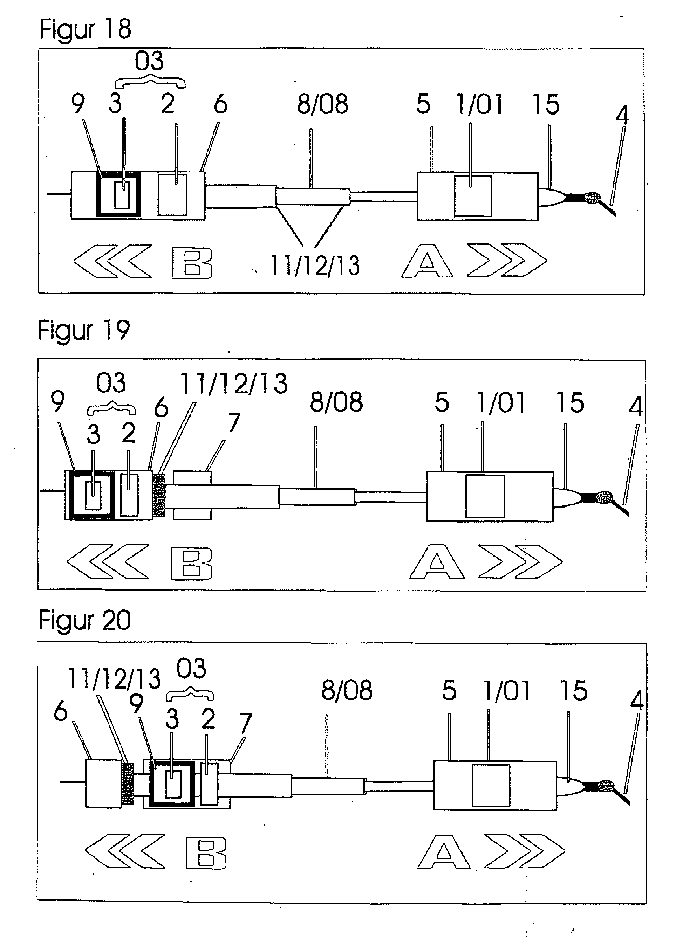

Bei Fig. 18 sind die zweite und die weitere Klemmeinrichtung 2 bzw. 3 gemeinsam im zweiten Betätigungskörper 6 angeordnet. Insgesamt wird dadurch eine manuelle Klemmeinrichtung 03 gebildet.

Bei der Ausführungsvariante von Fig. 19 ist der Betätigungskörper 6 über ein Radiallager 11 bzw. ein Ratschensystem 12, 13 mit einem starren oder nicht starren Teleskoprohr 8, 08 verbunden, auf der ein weiterer Betätigungskörper 7 angeordnet ist.

Fig. 20 zeigt eine Ausführungsvariante, bei der in einem Betätigungskörper 7 eine zweite Klemmeinrichtung 2 und eine weitere Klemmeinrichtung 3 integriert sind, die über ein Radiallager 11 oder ein Ratschensystem 12, 13 mit einem dahinter angeordneten zweiten Betätigungskörper 6 verbunden sind.

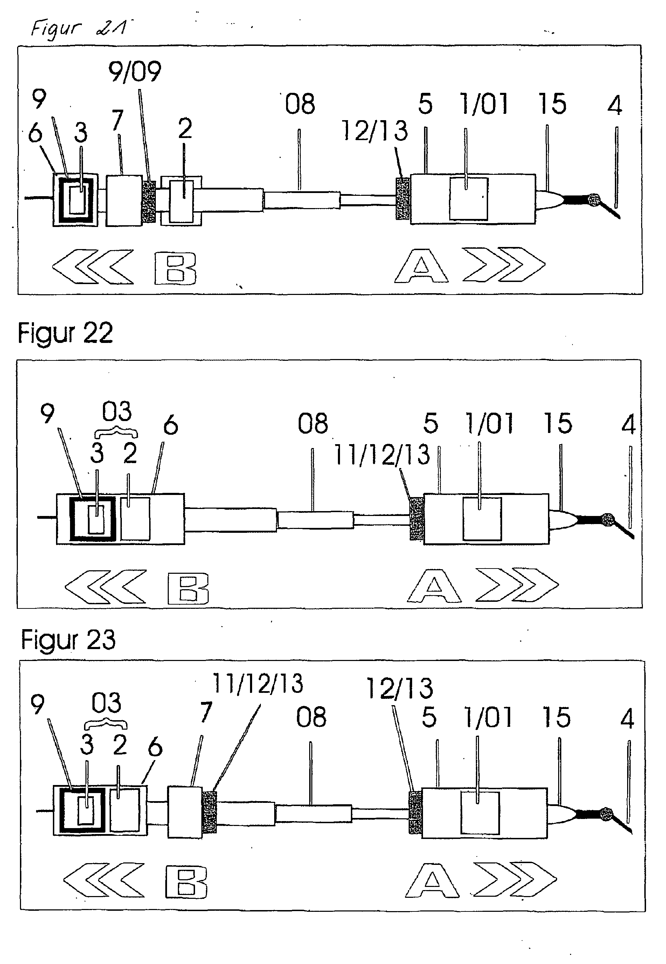

Fig. 21 zeigt eine Ausführungsvariante, bei der am hinteren Ende der Vorrichtung die zweite Klemmeinrichtung 2 vorgesehen ist, die über ein erstes Getriebe 9, 09 mit einem Betätigungskörper 7 verbunden ist, hinter dem ein zweiter Betätigungskörper 6 mit einer darin angeordneten Klemmeinrichtung 3 angeordnet ist. Wie bei den oben beschriebenen Ausführungsvarianten ist dabei die weitere Klemmeinrichtung 3 über ein Übersetzungsgetriebe 9 mit den übrigen Bauteilen verbunden.

Die Ausführungsvariante von Fig. 22 entspricht im Wesentlichen der von Fig. 17 mit dem Unterschied, dass die Klemmeinrichtungen 2 und 3 in einem gemeinsamen Betätigungskörper 6 integriert sind. Eine ähnliche Lösung ist auch in Fig. 23 offenbart, wobei hier zusätzlich ein weiterer Betätigungskörper 7 an dem Teleskoprohr 08 vorgesehen ist.

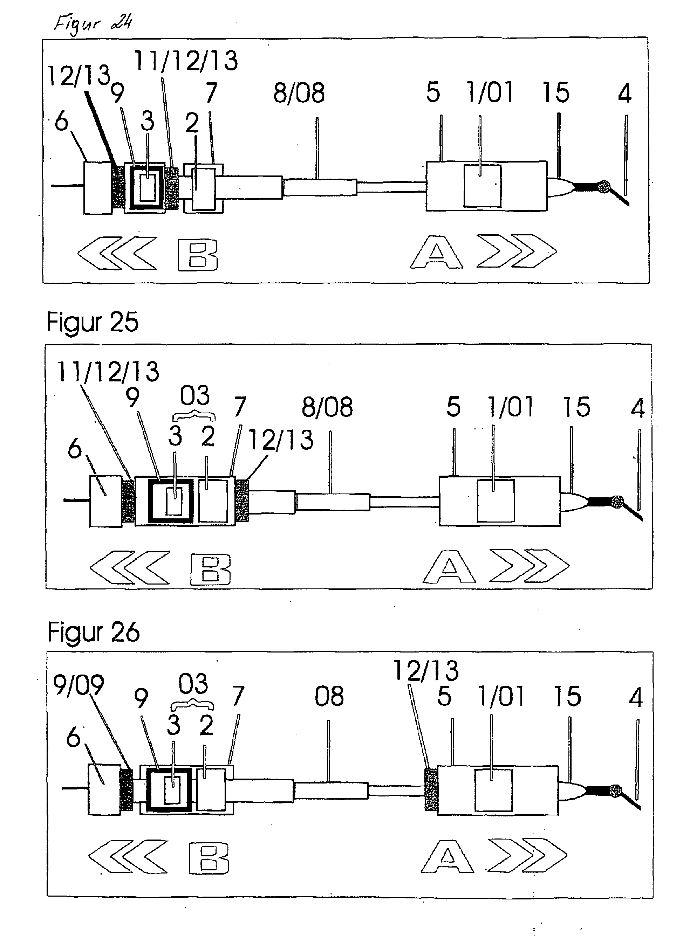

Bei der Ausführungsvariante von Fig. 24 ist die weitere Klemmeinrichtung 3 beidseits über Radiallager 11 bzw. Ratschensysteme 12, 13 mit Betätigungskörpern 7 verbunden.

Bei den Ausführungsvarianten von Fig. 25 und Fig. 26 sind die beiden Betätigungseinrichtungen 2 und 3 im weiteren Betätigungskörper 7 integriert.

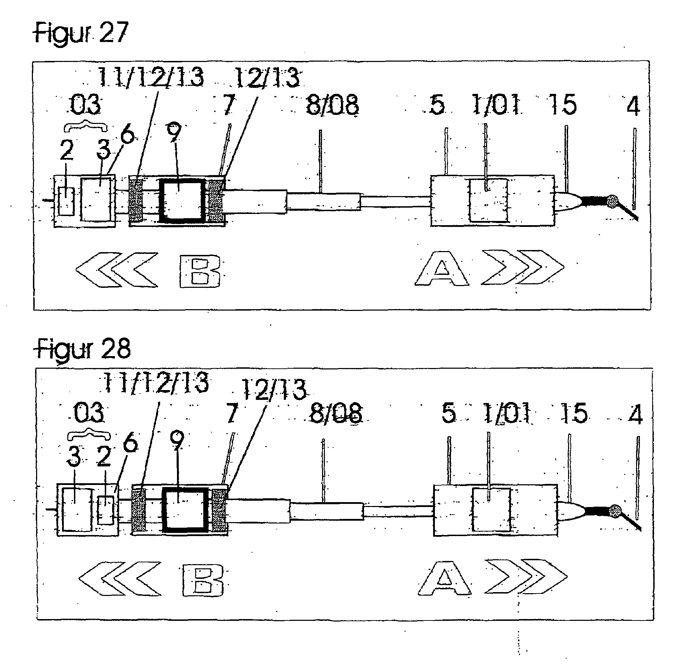

Fig. 27 zeigt eine Ausführungsvariante, bei der ein Getriebe 9 beidseits mit einem Radiallager 11 bzw. Freilaufsystemen 12, 13 versehen ist und einerseits mit einem Betätigungskörper 6 und andererseits mit dem Teleskoprohr in Verbindung steht. Im Betätigungskörper 6 sind dabei Klemmeinrichtungen 2 und 3 integriert angeordnet.

Fig. 28 unterscheidet sich von Fig. 27 dadurch, dass die Anordnung der beiden Klemmeinrichtungen 2 und 3 in umgekehrter Weise gewählt ist.

Legende zu den angeführten Ausführungsversionen
- 01: Manuelle Klemmeinrichtung
- 1: Automatische Ausführung der Klemmeinrichtung 01
1A Radiallager Klemmung 1
1B Sperrklinken der automatischen Klemmung 1
1C Entriegelung bzw. Aktivierungsvorrichtung für automatische Klemmung 1 Variante der Klemmeinrichtung 1
100 Klemmeinrichtung durch Konus mit Kugeln
101 Klemmkugeln
102 Spannfeder
103 Freilaufrichtung Feder 4
104 Sperrrichtung Feder 4
105 Konus
- 02: Manuelle Klemmeinrichtung
- 2: Automatische Ausführung der Klemmeinrichtung 02
2A Radiallager Klemmung 2
2B Sperrklinken der automatischen Klemmung 2
2C Entriegelung bzw. Aktivierungsvorrichtung für automatische Klemmung 2 Variante der Klemmeinrichtung 2
100 Klemmeinrichtung durch Konus mit Kugeln
101 Klemmkugeln
102 Spannfeder
103 Freilaufrichtung Feder 4
104 Sperrrichtung Feder 4
105 Konus
- 3: Manuelle Klemmeinrichtung
- 03: Manuelle Klemmeinrichtung 3 in automatischer Klemmeinrichtung (2) integriert
Variante der Klemmeinrichtung 3 als automatische Klemmvorrichtung
200 Radiale Klemmeinrichtung durch exzenterförmige Backen
201 Exzenterförmige Sperrklinke in Radialrichtung
202 Verdrehrichtung (Radial) Klemmungsfreigabe
203 Klemm- und Verdrehrichtung (Radial) Variante der Klemmeinrichtung 3
300 Klemmeinrichtung durch mechanisches Anpressen von Anpressbacken
301 Anpressbacken
302 Anpressrichtung der Anpressbacken
303 Verdrehrichtung der Klemmeinrichtung
- 4: Einziehfeder
- 5: Betätigungkörper
- 6: Betätigungskörper
- 7: Betätigungskörper
- 8: Teleskoprohr, bei dem die einzelnen Stangen radial drehbar sind
- 08: Teleskoprohr, bei dem die einzelnen Stangen nicht radial drehbar sind (starr)
8A mögliche Ausführungsvariante radial verdrehfestes Teleskopsystem
8B mögliche Ausführungsversion radial verdrehfestes Teleskopsystem
8C mögliche Ausführungsvariante radial verdrehfestes Teleskopsystem
8D Nut
8E Feder
- 9: Übersetzungsgetriebe
9a Planetenträger
9b Planetenträger (Hohlrad)
9c Sonnenrad
14 Hohlwelle
- 10: Doppelratschensystem
12 Ratschensystem - Freilauflager links Lauf
13 Ratschensystem - Freilauflager rechts Lauf
- 11: Radiallager
- 12: Ratschensystem - Freilauflager links Lauf
- 13: Ratschensystem - Freilauflager rechts Lauf
- 14: Hohlwelle
- 15: Mundstück
15a Entspannrichtung
15b Klemmrichtung
15c Einschuböffnung für Elektroleitung
15d Einführungsnase
15e flexibler Schlauch
15f Klemmsteg
15g Klemmbacken
15h Fixierring bzw. Klemmring
15i Ansteckkupplung bzw. Schnellverschluss an dem Betätigungskörper 1
15j Eleketroleitung bzw. Elektroschlauch

## Patentansprüche

1. Vorrichtung zum Einführen von einer Einziehfeder (4) in Rohre mit:
- einem ersten Bestätigungskörper (5), in dem die Einziehfeder (4) gleitend geführt ist;
- einer im ersten Betätigungskörper (5) angeordneten ersten Klemmeinrichtung (1, 01), die die Bewegung der Einziehfeder (4) sperrt und freigibt;
- einem zweiten Betätigungskörper (6, 7), in dem die Einziehfeder (4) gleitend geführt ist;
- einer vorzugsweise im zweiten Betätigungskörper (6, 7) angeordneten zweiten Klemmeinrichtung (2, 02), die die Bewegung der Einziehfeder (4) sperrt und freigibt;
- einem Teleskoprohr (8, 08), das die erste Klemmeinrichtung (1, 01) und die zweiten Klemmeinrichtung (2, 02) verbindet;
**dadurch gekennzeichnet, dass** eine weitere Klemmeinrichtung (03, 3) vorgesehen ist, die zum Festklemmen der Einziehfeder (4) ausgebildet ist.

2. Vorrichtung nach Anspruch 1, **dadurch gekennzeichnet, dass** die Klemmeinrichtung (1) im ersten Betätigungskörper (5) die Einziehfeder (4) in einer vorbestimmten Richtung sperrt und in die entgegengesetzte Richtung freigibt.

3. Vorrichtung nach Anspruch 1 oder 2, **dadurch gekennzeichnet, dass** die zweite Klemmeinrichtung (2) im zweiten Betätigungskörper (6, 7) die Einziehfeder (4) in einer vorbestimmte Richtung sperrt und in die entgegengesetzte Richtung freigibt.

4. Vorrichtung nach einem der Ansprüche 1 bis 3, **dadurch gekennzeichnet, dass** die erste Klemmeinrichtung (01, 1) gegenüber dem ersten Betätigungskörper (5) verdrehbar gelagert ist.

5. Vorrichtung nach einem der Ansprüche 1 bis 4, **dadurch gekennzeichnet, dass** die zweite Klemmeinrichtung (02, 2) gegenüber dem zweiten Betätigungskörper (6, 7) verdrehbar gelagert ist.

6. Vorrichtung nach einem der Ansprüche 1 bis 5, **dadurch gekennzeichnet, dass** eine Klemmeinrichtung (01, 1; 02, 2; 03, 3) mit einem Ratschensystem (12, 13) verbunden ist.

7. Vorrichtung nach einem der Ansprüche 1 bis 6, **dadurch gekennzeichnet, dass** das Teleskoprohr (08) verdrehfest ausgebildet ist.

8. Vorrichtung nach einem der Ansprüche 1 bis 7, **dadurch gekennzeichnet, dass** die weitere Klemmeinrichtung (03, 3) mit einem Betätigungskörper (5, 6, 7) verbunden ist.

9. Vorrichtung nach einem der Ansprüche 1 bis 8, **dadurch gekennzeichnet, dass** die weitere Klemmeinrichtung (03, 3) als Feststelleinrichtung für die erste oder die zweite Klemmeinrichtung (01, 1; 02, 2) ausgebildet ist.

10. Vorrichtung nach einem der Ansprüche 1 bis 9, **dadurch gekennzeichnet, dass** die weitere Klemmeinrichtung (03, 3) mit mindestens einem Radiallager (12, 13) verbunden ist.

11. Vorrichtung nach einem der Ansprüche 1 bis 10, **dadurch gekennzeichnet, dass** die weitere Klemmeinrichtung (03, 3) mit mindestens einem Ratschensystems (12, 13) verbunden ist, das vorzugsweise als Doppel-Ratschensystem (10) ausgebildet ist, das durch Zusammenwirken von zwei Freilauflagern/Ratschensystemen (12, 13) durch einfache Ratschenbewegung der Betätigungskörper (5, 6, 7) eine radiale Drehbewegung der weiteren Klemmeinrichtung (03, 3) erzeugt.

12. Vorrichtung nach einem der Ansprüche 7 bis 11, **dadurch gekennzeichnet, dass** die weitere Klemmeinrichtung (03, 3) als gegenüber dem Betätigungskörper (6) verdrehbarer Handgriff ausgebildet ist.

13. Vorrichtung nach einem der Ansprüche 1 bis 12, **dadurch gekennzeichnet, dass** ein Übersetzungsgetriebe (9), welches in Radialrichtung der weiteren Klemmeinrichtung (03, 3) wirkt und diese um die eigene Achse bewegt, vorgesehen ist, welches vorzugsweise als Übersetzung ins Schnelle ausgebildet ist.

14. Vorrichtung nach einem der Ansprüche 1 bis 13, **dadurch gekennzeichnet, dass** die weitere Klemmeinrichtung (03, 3) Backen (301) aufweist, die gegen die Einziehfeder (4) pressbar sind.

15. Vorrichtung nach einem der Ansprüche 1 bis 14, **dadurch gekennzeichnet, dass** die weitere Klemmeinrichtung (03, 3) eine exzenterförmige Backe (201) aufweist, die gegen die Einziehfeder (4) selbst unterstützend pressbar ist.

16. Vorrichtung nach einem der Ansprüche 1 bis 15, **dadurch gekennzeichnet, dass** die weitere Klemmeinrichtung (03, 3) manuell verriegelbar und entriegelbar ist.

17. Vorrichtung nach einem der Ansprüche 1 bis 16, **dadurch gekennzeichnet, dass** die erste Klemmeinrichtung (1) und die zweite Klemmeinrichtung (2) jeweils eine umschaltbare Klemmeinrichtung aufweisen.

18. Vorrichtung nach einem der Ansprüche 1 bis 17, **dadurch gekennzeichnet, dass** die Klemmeinrichtungen (1, 2) als Sperrklinken (1B, 2B) ausgebildet sind.

19. Vorrichtung nach einem der Ansprüche 1 bis 18, **dadurch gekennzeichnet, dass** die Klemmeinrichtungen (1, 2) als Konus (105) ausgebildet sind, durch den die Einziehfeder (4) durchgeführt ist und in den Klemmkugeln (101) angeordnet sind, um die Bewegung der Einziehfeder (4) in eine Richtung zu sperren.

20. Vorrichtung nach einem der Ansprüche 1 bis 19, **dadurch gekennzeichnet, dass** am Betätigungskörper (5) ein Mundstück (15) zum Einführen der Einziehfeder (4) in eine Öffnung des Rohres (15J) vorgesehen ist, und dass das Mundstück (15) einen flexiblen Schlauch (15E) umfasst, der die Einziehfeder (4) führt.

21. Vorrichtung nach einem der Ansprüche 1 bis 20, **dadurch gekennzeichnet, dass** das Mundstück (15) einen flexiblen Schlauch (15E) umfasst, der die Einziehfeder (4) führt und mit einem mechanischen Klemmstück (15F, 15G, 15H) versehen ist, welches mit einem Schnellverschluss zur Festklemmung an Elektroschläuche und Rohre versehen ist.
